(19) Europäisches Patentamt
European Patent Office
Office européen des brevets

(11) Veröffentlichungsnummer: **0 209 859**
**A2**

(12) **EUROPÄISCHE PATENTANMELDUNG**

(21) Anmeldenummer: 86109865.5

(22) Anmeldetag: 18.07.86

(51) Int. Cl.⁴: C09J 7/00 , C08F 283/10

(30) Priorität: 23.07.85 DE 3526270

(43) Veröffentlichungstag der Anmeldung:
28.01.87 Patentblatt 87/05

(84) Benannte Vertragsstaaten:
AT BE CH DE FR GB IT LI NL SE

(71) Anmelder: Herberts Gesellschaft mit beschränkter Haftung
Christbusch 25
D-5600 Wuppertal 2(DE)

(72) Erfinder: Hänsel, Edward, Dr. Dipl.-Chem.
Am Brambusch 15
D-4000 Düsseldorf(DE)
Erfinder: Curcic, Nebojsa
Rödiger-Strasse 135
D-5600 Wuppertal 2(DE)
Erfinder: Stein, Manfred, Dr. Dipl.-Chem.
Diepenbroich-Weg 6
D-5030 Hürth-Efferen(DE)

(74) Vertreter: Türk, Dietmar, Dr. rer. nat. et al
Türk, Gille + Hrabal Patentanwälte Bruckner Strasse 20
D-4000 Düsseldorf 13(DE)

(54) **Wärmehärtbare Klebfolie.**

(57) Die Erfindung betrifft eine wärmehärtbare Klebfolie auf Basis von Epoxidharzen und Vinylpolymerisaten, latentem Härter und üblichen Zusatzstoffen, die dadurch gekennzeichnet ist, daß sie in einer Menge von 5 bis 100 Gew.-%, bezogen auf die Epoxidharze, olefinisch ungesättigte, polymerisierbare Verbindungen mit einem Molekulargewicht $\overline{M}_n$ von 400 bis 12000 und einer Viskosität von weniger als $10^3$ Pa•s bei 50°C enthält, und/oder daß 10 bis 90 Gew.-% des gesamten in der Klebfolie enthaltenen Vinylpolymerisats aus Polyvinylacetal bestehen. Die Erfindung betrifft auch die Herstellung und Verwendung der Klebfolie.

EP 0 209 859 A2

# Wärmehärtbare Klebfolie

Die vorliegende Erfindung betrifft eine wärmehärtbare Klebfolie auf Basis von Epoxidharzen und Vinylpolymerisaten, latentem Härter sowie üblichen Zusatzstoffen, ein Verfahren zur Herstellung derselben und ihre Verwendung.

Der erfindungsmäßige Gedanke der vorliegenden Erfindung liegt darin, aus an sich bekannten Klebrohstoffen ohne Zuhilfenahme von Lösungsmitteln eine Zubereitung herzustellen, deren feindisperser, homogener Endzustand durch den Einsatz eines schnellaufenden Dissolvers erreicht wird. Im Vergleich zu den für solche Klebstoffsysteme bisher üblichen Mischwerkzeugen wie beispielsweise Z-oder Sigma-Knetern wird dadurch die Produktionsdauer verkürzt sowie die Wirtschaftlichkeit der Herstellung erhöht.

Reaktive Klebstoffsysteme auf der Basis von Epoxidharzen sind als Hochleistungsklebstoffe gut bekannt, wobei als Härter beispielsweise carboxy- oder aminofunktionelle Komponenten eingesetzt werden können. Will man anwendungsbedingt unabhängig von der Topfzeit solcher Reaktivsysteme arbeiten, verwendet man Härter, welche bei Raumtemperatur der Epoxidfunktion gegenüber inert bleiben und deren Vernetzungsreaktion mit dem Epoxid erst bei erhöhter Temperatur in Gang kommt. Diese sogenannten Latenthärter sind zum Beispiel Diaminodiphenylsulfon oder Dicyandiamid, um einige zu nennen.

In ihrer Handhabung ganz besonders vorteilhaft sind solche heißhärtenden Epoxidklebstoffe, wenn das Material lösemittelfrei auf die zu verbindenden Fügeteile aufgebracht werden kann, wobei verarbeitungsmäßig das Aufbringen als Klebfolie als optimal anzusehen ist.

Es hat deshalb in letzter Zeit verschiedene Versuche gegeben, durch Compoundierung von an sich sprödharten Epoxidharzen mit geeigneten Vinylpolymerisaten zu dimensionsstabilen, flexiblen, wärmehärtbaren Klebfolien zu kommen, wobei die Auswahl des Vinylpolymerisats dadurch eingeschränkt wird, daß das Vinylpolymerisat mit dem Epoxidharz fein dispers und ohne Makrophasentrennung mischbar und bei Raumtemperatur lagerfähig sein muß. In der DE-PS 19 32 707 werden derartige Mischungen beschrieben, wobei insbesondere Vinylalkohol-Ethylen-Copolymere als Vinylpolymerisat genannt werden. Der Epoxidharz-Anteil der Mischungen bleibt allerdings unter 30 Gew.-%. Ein deutlich höherer Epoxidharz-Anteil kann eingearbeitet werden, wenn man als Vinylpolymerisat Ethylen-Vinylacetat-Copolymere mit ca. 30 % Vinylacetat-Gehalt einsetzt. In der DE-A-32 43 383 werden solche Mischungen aus Ethylen-Vinylacetat-Copolymeren und Epoxidharzen beschrieben. Die Einarbeitung des Latenthärters in die Klebstoffmischung verlangt allerdings thermische Bedingungen, die nur von besonders reaktionsträgen Härtern erfüllt werden können. Die resultierenden langen Zeittakte bei der endgültigen Aushärtung der Klebfolie wirken für mechanisierte Produktionsabläufe verzögernd und darüberhinaus thermisch belastend für die zu verklebenden Werkstoffe.

Es bestand daher die Aufgabe, eine lösemittelfrei herstellbare, flexible und dimensionsstabile Klebfolie auf der Basis von Epoxidharzen und Vinylpolymerisaten, latentem Härter und den üblichen Zusatzstoffen zu entwickeln, für welche die feindisperse Verteilung der Komponenten unterhalb der Ansprechtemperatur des Latenthärters innerhalb weniger Minuten durch ein schnellaufendes Rührwerk erreicht werden kann.

Diese Aufgabe wird gelöst durch eine wärmehärtbare Klebfolie, die in einer Menge von 5 bis 100 Gew.-%, bezogen auf die Epoxidharze, olefinisch ungesättigte, polymerisierbare Verbindungen mit einem Molekulargewicht $\overline{M_n}$ von 400 bis 12000 und einer Viskosität von weniger als $10^3$ Pa•s bei 50°C enthält, und/oder in der 10 bis 90 Gew.-% der Gesamtmenge des in der Klebfolie enthaltenden Vinylpolymerisats aus Polyvinylacetalen bestehen.

Bevorzugt sind olefinisch ungesättigte, polymersierbare Verbindungen mit einem Molekulargewicht $\overline{M_n}$ von 450 bis 5000 und solche, die eine Viskosität von weniger als 10 Pa•s bei 50°C aufweisen.

Die olefinisch ungesättigten, polymerisierbaren Verbindungen wirken bei erhöhten Temperaturen, aber noch unter der Ansprechtemperatur des latenten Härters, plastifizierend auf die Mischung.

Bevorzugte olefinisch ungesättigte Verbindungen sind Addukte von (Meth)acrylsäure an Epoxidgruppen enthaltende Verbindungen. Diese Epoxidgruppen enthaltenden Verbindungen können Glycidylether von aromatischen oder aromatisch-aliphatischen Bisphenolen sein, vorzugsweise von Bisphenol A. Solche Komponenten sind beispielsweise Addukte aus Bisphenol-A-Glycidylethern mit 1 bis 15 Bisphenolsegmenten und terminalen Epoxyfunktionen und $\alpha$-olefinisch ungesättigten Carbonsäuren vom Typ der Acrylsäure. Zur Herstellung solcher Verbindungen: vgl. auch H.Jahn, "Epoxidharze", VEB Verlag für Grundstoffindustrie, Leipzig.

Diese bevorzugten olefinisch ungesättigten, polymerisierbaren Verbindungen werden durch die nachstehende allgemeine Strukturformel I wiedergegeben.

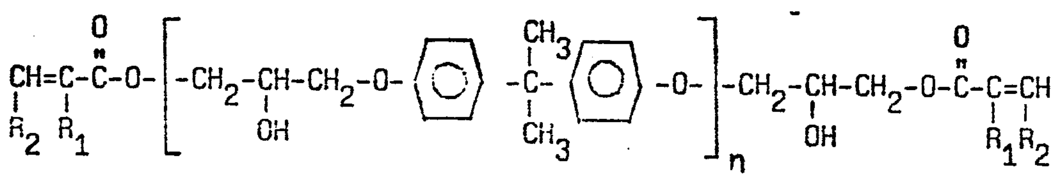 I

worin $R_1$ = H oder $CH_3$, $R_2$ = $C_mH_{2m+1}$ mit 1 bis 8 und n = 1 bis 15 bedeuten.

Als olefinisch ungesättigte, polymerisierbare Verbindungen können auch solche Produkte eingesetzt werden, die der Strukturformel I prinzipiell entsprechen, die aber hinsichtlich ihrer (Meth)-acrylfunktion tris-bis hexafunktionell sind. Solche Produkte können im Gemisch mit den bifunktionellen Produkten der Strukturformel I eingesetzt werden, als alleinige olefinisch ungesättigte, polymerisierbare Verbindungen sind sie nicht bevorzugt.

(Meth)acrylterminierte lineare Polyester sind als olefinisch ungesättigte, polymersierbare Verbindungen ebenfalls geeignet, wobei als Polyestersegment lineare Polyester bevorzugt sind. Solche (meth)acryloierten Polyester können aus hydroxyl- oder glycidylterminierten Polyestern nach bekannten Verfahren hergestellt werden. Auch hinsichtlich ihrer (Meth)acrylfunktion mehr als bifunktionelle Polyester können im Gemisch mit bifunktionellen Produkten eingesetzt werden, sie sind als alleinige olefinisch ungesättigte, polymerisierbare Verbindungen nicht bevorzugt. Die Brookfield-Viskosität der Polyester enthaltenden olefinisch ungesättigten, polymerisierbaren Verbindungen sollte bei 50°C unter $10^3$ Pa•s liegen.

Der Gewichtsanteil der olefinisch ungesättigten, polymerisierbaren Verbindungen an der Gesamtrezeptur liegt zwischen 2 und 40 Gew.-% bevorzugt zwischen 6 und 25 Gew.-%.

Die erfindungsgemäß verwendeten Vinylpolymerisate sind zum Beispiel Copolymere auf der Basis von Ethylen-Vinylestern; geeignet sind auch die Alkylester der Acryl-oder Maleinsäure, wobei das mittlere Molekulargewicht $\overline{M}n$ der Copolymere zwischen 20000 und 300000 liegen soll. Bevorzugt sind Ethylen-Vinylacetat-Copolymere mit einem Vinylacetat-Anteil von 22 bis 35 Gew.-% und mit Schmelzindex > 5. Ebenso geeignet als Vinylpolymerisate sind auch Polyvinylacetale, wie sie durch Acetalisierung von Polyvinylalkohol mit aliphatischen Aldehyden herstellbar sind. Bevorzugt sind Acetale des Butyraldehyds, wobei sowohl niedrigwie hochacetalisierte Typen mit 15 bis 30 Gew.-% OH-Gruppen eingesetzt werden können. Polyvinylacetale sollen in der Klebstoffzubereitung nicht als alleinige Vinylpolymerisate, sondern in Mischung mit Ethylen-Vinylacetat-Copolymeren eingesetzt werden. Es hat sich gezeigt, daß die angestrebte Wirkung erzielt wird, wenn die wärmehärtbare Klebfolie Vinylpolymerisate enthält, die, bezogen auf die Gesamtmenge der Vinylpolymerisate, zu 10 bis 90 Gew.-% aus Polyvinylacetalen bestehen. In diesem Falle ist der Gehalt an olefinisch ungesättigten Verbindungen nicht erforderlich. Die olefinisch ungesättigten Verbindungen können jedoch zusätzlich enthalten sein. Bevorzugt enthält die Klebfolie Polyvinylbutyrale und besonders bevorzugt solche mit einem Molgewicht $\overline{M}n$ von 20000 bis 80000 mit etwa 15 bis 30 % OH-Gruppen und einem Schmelzindex bei 150°C von 2 bis 12 g/10 min.

Der Anteil der Vinylpolymerisate an der Gesamtrezeptur ist dadurch bestimmt, daß diese in ausreichender Menge zur Erzielung einer extrudier- oder kalandrierbaren, wickelfähigen Folie vorhanden sein müssen, in welche das Epoxi-Härtersystem eingebettet ist. Im allgemeinen beträgt das Gewichtsverhältnis von Epoxidharz zu Vinylpolymerisat 30 bis 180 zu 100, bevorzugt 50 bis 170 zu 100. Besonders bevorzugt beträgt das Verhältnis 80 bis 120 zu 100, wenn olefinisch ungesättigte polymerisierbare Verbindungen zugesetzt werden, mit 80 bis 170, wenn sie nicht zugesetzt werden.

Die zur Verwendung bei der Erfindung geeigneten Epoxidharze sind Epoxidverbindungen mit mindestens zwei Epoxidgruppen im Molekül, wie z.B. Polyglycidylether von Polyhydroxyphenolen auf Basis von Bisphenol A mit einem Epoxi-Äquivalent von 150 bis 5000, bevorzugt von 180 bis 2000. Geeignet sind auch Polyglycidylether vom Phenol-oder Kresol-Novolak-Typ, Polyglycidylester von di-oder polyvalenten Carbonsäuren (z.B. Isophthalsäure, Tetrahydrophthalsäure, Adipinsäure) und Poly-N-Glycidylverbindungen wie zum Beispiel N,N'-Diglycidylderivate des Bis-p-methylaminophenylmethans. Ebenfalls geeignet, wenn auch weniger bevorzugt, sind Epoxidharze, worin die Epoxidgruppen innenständig sind, wie z.B. Bis-(3,4-epoxi-6-methylcyclohexyl)adipat sowie Epoxidharze, die sowohl terminale als auch innenständige Epoxidgruppen enthalten, wie 3,4-Epoxicyclohexylmethylglycidether.

Diese Epoxidharze können allein oder in einer Kombination zweier oder mehrerer derartiger Verbindungen eingesetzt werden. Die untere Grenze des Epoxidharzanteils einer erfindungsgemäßen

Mischung ist dadurch gegeben, daß das Harz/Härtersystem noch zu einer festen, harten Klebfuge aushärten kann. Das Unterschreiten dieser Grenze wirkt sich klebetechnisch durch Verminderung der Zugscherfestigkeit insbesondere bei erhöhten Temperaturen aus.

Geeignete Latenthärter für die erfindungsgemäßen Klebfolien sind Produkte, die auch in feindispersem Zustand bei Temperaturen um 100°C der Epoxifunktion gegenüber so inert sind, daß bei dieser Temperatur während der Dispergierungsphase noch keine Vernetzung auftritt. Als Beobachtungszeitraum für durch Vernetzungsvorgänge ausgelöste Viskositätsänderungen der Klebstoffmischung sind 10 bis 40 min anzusehen. Derartige Latenthärter für Epoxidharze sind z.B. in der DE-OS 20 02 880 und in der britischen Patentschrift 1 121 196 beschrieben. Die Menge des Härters ist so zu bemessen, daß das Epoxidharz-Vinylpolymerisatgemisch zu einem unlöslichen, - schwerschmelzbaren Produkt aushärten kann. Die zur Erzielung optimaler Klebeigenschaften erforderliche Härtermenge kann leicht durch übliche Prüfverfahren, wie z.B. Zugscherversuche, ermittelt werden kann.

Erforderlichenfalls können der Klebrohmasse Härtungsbeschleuniger, wie z.B. $BF_3$-Komplexverbindungen oder N-Heterocyclen zugesetzt werden, wie sie in der japanischen Patentschrift 152936/82 beschrieben werden. Der Beschleuniger ist so zu dosieren und auszuwählen, daß durch ihn die Vernetzungsreaktion erst oberhalb der Verarbeitungstemperatur der Klebstoffzubereitung in Gang gesetzt wird.

Zum chemischen Ablauf der wärmeinduzierten Vernetzungsreaktion von Epoxidharzen vgl. auch P.EYERER, Journal of Applied Polymer Science, 15 (1971), 3067-3088. Bevorzugt sind Klebfugenaushärtungstemperaturen von 160 bis 190°C, steht ausreichend Zeit für die Härtung zu Verfügung, können auch Temperaturen unter 160°C angewendet werden.

Bevorzugt enthält die Klebfolie zur Beschleunigung der Polymerisation der olefinisch ungesättigten Komponente Radikalspender, vorzugsweise Peroxide, die bei der Aushärtung des Epoxidharzes thermisch induziert zu Radikalen zerfallen und eine radikalische Vernetzungsreaktion der (meth)acrylterminierten olefinisch ungesättigten, polymerisierbaren Verbindung bewirken, wodurch eine Steigerung der Bindefestigkeit der Klebfuge erreicht wird. Die Auswahl des Radikalspenders ist bezüglich seiner Scorch-Temperatur und Halbwertszeit auf das vorgegebene Epoxid-Härtersystem abzustimmen; bevorzugt weist er eine Scorch-Temperatur von über 110°C auf. Der Anteil des Radikalspenders liegt zwischen 0,05 und 1,5 Gew.-% der Gesamtrezeptur der Klebstoffzubereitung. Geeignete Radikalspender sind z.B. Bis(t-butylperoxiisopropyl)benzol, 3,5-Bis(t-butylperoxi)-3,5-dimethyldioxolan oder Dicumylperoxid, um einige zu nennen. Es ist auch möglich, die Vernetzungsreaktion mit einem peroxidfreien Initiator in Gang zu bringen wie z.B. mit 2,2,3,3-Tetramethylbutan.

Um eine möglichst feindisperse Mischung der Einzelkomponenten zu erreichen, setzt man dem Mischgut gegebenenfalls Emulgatoren wie z.B. Polyglycole mit längeren Alkylketten oder Diester von Dicarbonsäuren mit Alkoxygruppen von $C_8$ bis $C_{18}$ zu. Der Klebstoffzubereitung können Folienweichmacher zugesetzt werden, wie z.B. Fettsäureester des Triethylenglycols, außerdem können Füllstoffe eingearbeitet werden wie Quarzmehl, Calciumcarbonat oder Mikroglaskugeln, wobei der Füllstoffanteil so zu bemessen ist, daß die Wickelfähigkeit und Zugfestigkeit der Folie einerseits und die Bindefestigkeit der ausgehärteten Klebfuge andererseits nicht beeinträchtigt werden. Flammhemmende Mittel, Antistatika und Pigmente können ebenfalls zugemischt werden; solche Zusatzstoffe werden im allgemeinen vor Zugabe des Härters eingearbeitet. Weitere Beispiele von gegebenenfalls mitzuverwendenden Zusatzstoffen wie Stabilisatoren, fungistatisch oder bakteriostatisch wirksamen Stoffen sowie Einzelheiten über ihre Einsatz-und Verwendungsweise s. Kunststoffhandbuch Band VII, herausg. von Vieweg u. Höchtlen, Carl-Hanser-Verlag, München 1966.

Die erfindungsgemäßen Klebfolien können zur Verbesserung oder Modifizierung bestimmter Eigenschaften weitere Polymerisate enthalten, wie z.B. Copolymere von Acrylestern, Vinylestern und Styrol, wie sie in der DE-A-19 64 743 beschrieben werden. Weitere Beispiele von Polymerisaten sind Celluloseacetobutyrat und Polyester. Beispielsweise ist auch der Zusatz von chlorsulfoniertem Polyethylen möglich. Bevorzugt überschreitet der Anteil dieser Produkt an der Gesamtrezeptur 15 % nicht. Die zur Herstellung der erfindungsgemäßen wärmehärtbaren Klebfolie verwandten Klebstoffzubereitungen können unterhalb der Ansprechtemperatur des Latenthärters in einem schnellaufenden Rührwerk homogenisiert werden. In dem Herstellungsverfahren werden die Komponenten bevorzugt in einem zylindrischen Gefäß mit einem Rührer homogenisiert. Das homogenisierte Gemisch wird dann zu einer Folie verarbeitet. Als Rührorgan ist besonders ein Tellerrührer geeignet, der Umlaufgeschwindigkeiten bis zu 8 m/sek. erreicht, wobei die zum Homogenisieren erforderliche Tourenzahl so einzustellen ist, daß ein Hochkriechen der Rohmasse an der Antriebsachse des Rührorgans unterbleibt.

Die Klebstoffzubereitungen können natürlich auch nach dem Stand der Technik, etwa wie in der DE-A-32 43 383 beschrieben, gemischt werden. So sind Extruder oder Kneter prinzipiell zur Homogenisierung der Klebstoffzubereitung geeignet, sie sind jedoch wegen der durch die geringe Tourenzahl des Mischvorgangs bedingten langen Verarbeitungsdauer von Nachteil.

Nach erfolgter Homogenisierung kann die Rohmasse in einem Granulator oder in einer Häckselvorrichtung zu rieselfähiger Krümelstruktur oder Schuppen verarbeitet werden.

Die Herstellung der Folien erfolgt in üblicher Weise durch Kalandrierung oder Schlitzextrudierung mit anschließender Glättwalzung. Die zu Folien verarbeiteten Mischungen können zum Verkleben von Metallsubstraten, wie Stahl, Aluminium oder Messing benutzt werden, sie sind aber auch für Verklebungen von Glas, Keramik und temperaturfesten Kunststoffen wie GFK oder Polycarbonat geeignet. Je nach Schichtdicke der aufgebrachten Klebfolie kann die ausgehärtete Klebfuge zusätzlich Dichtungsfunktion übernehmen. Desgleichen können auch gesinterte Fügeteile wie z.B. Metallcarbidsubstrate oder Metallschäume verklebt werden.

Die Erfindung wird durch die nachfolgenden Ausführungsbeispiele näher erläutert; alle Angaben nach Teilen, Verhältnissen und Prozentsätzen sind dabei als Gewichtsteile, Gewichtsverhältnisse und Gewichtsprozente zu lesen, wenn nicht anders angegeben.

Allgemeine Arbeitsvorschrift zur Herstellung und Verarbeitung der Klebstoffzubereitung.

In einem zylindrischen, beheizbaren Edelstahlgefäß mit Luftabsaugvorrichtung werden die Klebrohstoffe mit Ausnahme von Härter und Peroxiden auf 100 bis 120°C erwärmt und bei dieser Temperatur mit 2 bis 8 m/sec Umlaufgeschwindigkeit des Rührorgans dispergiert. Man läßt unter fortgesetztem Dispergieren abkühlen bis unter 100°C und arbeitet Härter und -ggf. Peroxid -in die Masse ein. Nach wenigen Minuten weiteren Dispergierens kann die homogenisierte Masse weiterer Verarbeitung zugeführt werden.

Die so hergestellten Mischungen werden bei 50 bis 85°C Massetemperatur in einem Kalander mit Walzentemperaturen von 10 bis 35°C zu Folien mit variabler Schichtdicke kalandriert und zu Rollen gewickelt. Es ist auch möglich, die Masse bei 50 bis 90°C durch einen Breitschlitzextruder mit nachfolgender Glättwalze zur Folie zu verarbeiten. Die Schichtdicke der so hergestellten Folien liegt zwischen 50 und 500 µm, bevorzugt zwischen 100 und 250 µm.

Prüfung der Folien auf Reißfestigkeit:

Ein 25,4 mm breiter und 100 mm langer Folienstreifen wird auf einer Länge von 100 mm in eine Zugprüfmaschine eingespannt. Man zieht die Folie mit 100 mm/min auseinander und mißt die Reißkraft in N/inch und die Dehnung nach Abriß in %.

Prüfung auf Bindefestigkeit nach Aushärtung

1,5 mm starke, entfettete Fe-Plättchen von 25 mm Breite werden mit 15 mm Überlappung verklebt, indem man ein entsprechend zugeschnittenes Folienstück auf eine Platte legt, das zweite, nichtbeschichtete zu verklebende Plättchen darauf legt und die Plättchen 15 min bei 180°C hält. Erforderlichenfalls können die zu verklebenden Teile auch mit leichtem Druck zusammengehalten werden. Nach Abkühlung der Fügeteile werden Zugscherprüfungen nach DIN 53281/53283 durchgeführt; alle Angaben sind Mittelwerte aus drei Messungen.

Zu den in den Versuchsbeispielen eingesetzten Rohstoffen

a) Epoxidharze

Die in den Versuchsbeispielen eingesetzten Epoxidharze sind nichtmodifizierte Festharze auf der Basis von Bisphenol A; es können Anteile von intern plastifizierten Flüssigharzen zugemischt werden; das Epoxi-Äquivalent der Mischung soll zwischen 350 und 1000 liegen.

b) Vinylpolymerisate

Die in den Versuchsbeispielen eingesetzten Filmbildner sind Ethylen-Vinylacetat-Copolymere von ca. 28 % Vinylacetat-Gehalt mit unterschiedlichen Schmelzindizes. Das ebenfalls als Filmbildner in den Versuchsbeispielen genannten Polyvinylbutyral hat ein mittleres Molgewicht $\overline{M}_n$ von 40000 bis 80000 und einen Schmelzindex, bei 150°C gemessen, von 2 bis 12 g/10 min.

c) olefinisch ungesättigte, polymerisierbare Verbindungen

In den Versuchsbeispielen eingesetzt werden Addukte von Bisphenol-A-Glycidylethern und Acrylsäure. Die Acrylfunktionalität beträgt 2.

d) Additive und Zusatzstoffe

Als Emulgator wird in den Versuchsbeispielen ein ethoxilierter Fettalkohol eingesetzt; als Zusatzstoff wird ein OH-Gruppen enthaltender Butylkautschuk mit OH-Zahl 100 eingesetzt.

e) Latenthärter

Die in den Versuchsbeispielen genannten Latenthärter sind Diaminodiphenylsulfon oder Dicyandiamid. In einzelnen Fällen wurden den Härtern Beschleuniger zugesetzt.

f) Peroxide

Die in den Versuchsbeispielen genannten Peroxide sind Bis(t-butylperoxiisopropyl)benzol, 2,5-Dimethylhexan-2,5-di-t-butylperoxid, t-Butylcumylperoxid und Dicumylperoxid. Diese Peroxide können allein oder im Gemisch eingesetzt werden.

Charakteristik des Bruchtyps der Klebfuge:

Als A-Bruch wird derjenige Bruchtyp bezeichnet, bei welchem die Separation zwischen der Phasengrenze Fügeteil/Klebstoff auftritt. C-Bruch bedeutet Separation innerhalb der Klebfuge.

| | MISCHUNG 1 | MISCHUNG 2 | MISCHUNG 3 | MISCHUNG 4 |
|---|---|---|---|---|
| VINYLPOLYMERISAT (EVA, Schmelzind.) | 42,8 (60) | 28,0 (110) | 16,7 (110) | 29,5 (25) |
| VINYLPOLYMERISAT (POLYVINYLBUTYRAL) | ---- | 8,7 | 7,0 | ---- |
| EPOXIDHARZ (EPOXI-ÄQUIVALENT) | 27,0 (390) | 47,0 (850) | 44,5 (700) | 34,2 (600) |
| OLEFINISCH UNGESÄTTIGTE, POLYMERISIERBARE VERBINDUNG | 26,5 | 10,0 | 26,0 | 31,1 |
| LATENTER HÄRTER | 3,7 | 4,8 | 3,7 | 4,7 |
| PEROXID | ---- | 0,5 | 1,0 | ---- |
| ADDITIVE UND ZUSATZSTOFFE | ---- | 1,0 | 1,0 | 0,5 |

| | MISCHUNG 5 | MISCHUNG 6 | MISCHUNG 7 | MISCHUNG 8 |
|---|---|---|---|---|
| VINYLPOLYMERISAT (EVA, Schmelzind.) | 27,0 (10) | 29,0 (70) | 49,0 (60) | 17,0 (150) |
| VINYLPOLYMERISAT (POLYVINYLBUTYRAL) | ---- | 20,0 | ---- | 5,0 |
| EPOXIDHARZ (EPOXI-ÄQUIVALENT) | 35,7 (390) | 37,5 (600) | 37,5 (600) | 45,3 (700) |
| OLEFINISCH UNGESÄTTIGTE, POLYMERISIERBARE VERBINDUNG | 31,8 | 7,5 | 7,5 | 28,0 |
| LATENTER HÄRTER | 5,0 | 4,0 | 4,0 | 3,7 |
| PEROXID | ---- | 1,0 | 1,0 | ---- |
| ADDITIVE UND ZUSATZSTOFFE | 0,5 | 1,0 | ---- | 1,0 |

| | MISCHUNG 1 | MISCHUNG 2 | MISCHUNG 3 | MISCHUNG 4 |
|---|---|---|---|---|
| PRÜFMETHODE | | | | |
| REISSPRÜFUNG | 3,9 N/cm | 15,7 N/cm | 6,3 N/cm | 44,1 N/cm |
| SCHICHTDICKE DER FOLIE | 360 µm | 300 µm | 150 µm | 250 µm |
| DEHNUNG | 110 % | 9 % | 16 % | 10 % |
| ZUGSCHERPRÜFUNG DIN 53283 | 15,4 N/mm² | 15,0 N/mm² | 26,1 N/mm² | 18,4 N/mm² |
| BRUCHTYP DER KLEBFUGE | C-Bruch | C-Bruch | C-Bruch | A/C-Bruch |
| BLOCKUNG BEIM WICKELN (20°C) | nein | nein | teilweise* | nein |

* Blockung unterbleibt beim Wickeln und Lagern unterhalb von 4°C

| | MISCHUNG 5 | MISCHUNG 6 | MISCHUNG 7 | MISCHUNG 8 |
|---|---|---|---|---|
| PRÜFMETHODE | | | | |
| REISSPRÜFUNG | 12,6 N/cm | 16,9 N/cm | 18,1 N/cm | 7,5 N/cm |
| SCHICHTDICKE DER FOLIE | 110 µm | 250 µm | 300 µm | 400 µm |
| DEHNUNG | 32 % | 6 % | 10 % | 6 % |
| ZUGSCHERPRÜFUNG DIN 53283 | 16,6 N/mm² | 15,3 N/mm² | 15,0 N/mm² | 24,7 N/mm² |
| BRUCHTYP DER KLEBFUGE | C-Bruch | C-Bruch | A/C-Bruch | C-Bruch |
| BLOCKUNG BEIM WICKELN (20°C) | wenig* | nein | nein | wenig* |

* Blockung unterbleibt beim Wickeln und Lagern unterhalb von 4°C

Mischung 9

Ethylen-Vinylacetat (EVA) mit 28 % VAc 19 %

Polyvinylbutyral, $\overline{m}_n$ ca. 40000 12 %

chlorsulfoniertes Polyethylen 6 %

Epoxidharze auf Basis Bisphenol 47 %

Oligo-Acrylat, $\overline{m}_n$ ca. 1000 (olefinisch ungesättigte Verbindung) 7 %

Dicyandiamid zzg. Additive (Weichmacher etc.) 9 %

Mischung 10 (ohne olefinisch ungesättigte polymerisierbare Verbindung)

Ethylen-Vinylacetat (EVA) mit 28 % VAc 22 %

Polyvinylbutyral, $\overline{m}_n$ ca. 40000 15 %

Epoxidharze auf Basis Bisphenol 59 %

LATENTHÄRTER Dicyandiamid 4 %

Mischung 11 (ohne olefinisch ungesättigte polymerisierbare Verbindung)

Ethylen-Vinylacetat (EVA) mit 28 % VAc 22 %

Polyvinylbutyral, $\overline{m}_n$ ca. 40000 14 %

Epoxidharze auf Basis Bisphenol, mit einer elastifizierenden Komponente (Kautschuk), Epoxiäquivalent 250 60 %

Dicyandiamid (beschleunigt mit einem Katalysator) 4 %

| | MISCHUNG 9 | MISCHUNG 10 | MISCHUNG 11 |
|---|---|---|---|
| PRÜFMETHODE | | | |
| REISSPRÜFUNG | 28,0 N/cm | 10,3 N/cm | 11,5 N/cm |
| SCHICHTDICKE DER FOLIE | 300 µm | 240 µm | 250 µm |
| DEHNUNG | 8 % | 10 % | 7 % |
| ZUGSCHERPRÜFUNG DIN 53283 | 18,0 $N/mm^2$ | 23,9 $N/mm^2$ | 22,5 $N/mm^2$ |
| BRUCHTYP DER KLEBFUGE | C-Bruch | C-Bruch | C-Bruch |
| BLOCKUNG BEIM WICKELN (20 °C) | leicht* | nein | nein |

* Folie ist blockfrei unter 4 °C

## Ansprüche

1. Wärmehärtbare Klebfolie auf Basis von Epoxidharzen und Vinylpolymerisaten, latentem Härter und üblichen Zusatzstoffen, **dadurch gekennzeichnet**, daß sie in einer Menge von 5 bis 100 Gew.-%, bezogen auf die Epoxidharze, olefinisch ungesättigte, polymerisierbare Verbindungen mit einem Molekulargewicht $\overline{M_n}$ von 400 bis 12000 und einer Viskosität von weniger als $10^3$ Pa•s bei 50°C enthält und/oder daß 10 bis 90 Gew.-% des gesamten in der Klebfolie enthaltenen Vinylpolymerisats aus Polyvinylacetal bestehen.

2. Wärmehärtbare Klebfolie nach Anspruch 1, dadurch gekennzeichnet, daß die olefinisch ungesättigten, polymerisierbaren Verbindungen ein Molekulargewicht $\overline{M_n}$ von 450 bis 5000 aufweisen.

3. Wärmehärtbare Klebfolie nach Anspruch 1 oder 2, dadurch gekennzeichnet, daß die olefinisch ungesättigten, polymerisierbaren Verbindungen eine Viskosität von weniger als 10 Pa•s bei 50°C aufweisen.

4. Wärmehärtbare Klebfolie nach einem oder mehreren der Ansprüche 1 bis 3, dadurch gekennzeichnet, daß die olefinisch ungesättigten, polymerisierbaren Verbindungen Addukte von (Meth)-acrylsäure an Epoxidgruppen enthaltende Verbindungen sind.

5. Wärmehärtbare Klebfolie nach Anspruch 4, dadurch gekennzeichnet, daß die Epoxidgruppen enthaltenden Verbindungen Glycidylether von aromatischen oder aromatisch-aliphatischen Bisphenolen (vorzugsweise Bisphenol A) sind.

6. Wärmehärtbare Klebfolie nach einem oder mehreren der Ansprüche 1 bis 5, dadurch gekennzeichnet, daß die olefinisch ungesättigten, polymerisierbaren Verbindungen solche der Strukturformel I sind

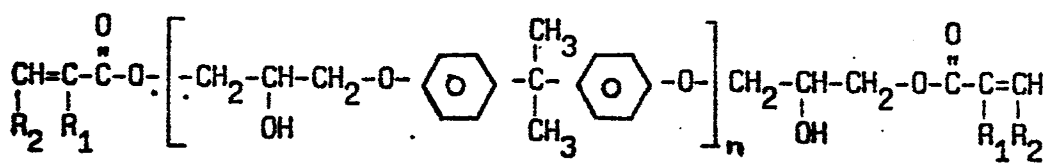

I

worin $R_1$ = H oder $CH_3$, $R_2$ = $C_mH_{2m+1}$ mit m = 1 bis 8 und n = 1 bis 15 bedeuten.

7. Wärmehärtbare Klebfolie nach einem oder mehreren der Ansprüche 1 bis 6, dadurch gekennzeichnet, daß sie zur Beschleunigung der Polymerisation der olefinisch ungesättigten, polymerisierbaren Verbindungen Radikalspender, vorzugsweise Peroxide, enthält.

8. Wärmehärtbare Klebfolie nach Anspruch 7, dadurch gekennzeichnet, daß der Radikalspender eine Scorch-Temperatur von über 110°C hat.

9. Wärmehärtbare Klebfolie nach den Ansprüchen 1 bis 8, dadurch gekennzeichnet, daß das Polyvinylacetal Polyvinylbutyral ist.

10. Wärmehärtbare Klebfolie nach Anspruch 9, dadurch gekennzeichnet, daß das Polyvinylbutyral ein Molgewicht $\overline{M_n}$ von 20000 bis 80000 hat und 15 bis 30 % OH-Gruppen und einen Schmelzindex bei 150°C von 2 bis 12 g/10 min aufweist.

11. Verfahren zur Herstellung einer wärmehärtbaren Klebfolie nach einem der Ansprüche 1 bis 10, dadurch gekennzeichnet, daß die Komponenten in einem zylindrischen Gefäß mit einem Rührer, vorzugsweise Tellerrührer, homogenisiert werden und das homogenisierte Gemisch zu einer Folie verarbeitet wird.

12. Verwendung der wärmehärtbaren Folie nach einem der Ansprüche 1 bis 10 zum Verkleben von zwei Oberflächen.